# EUROPÄISCHE PATENTSCHRIFT

(11) **EP 1 710 103 B1**
(45) Veröffentlichungstag und Bekanntmachung des Hinweises auf die Patenterteilung: **10.12.2008**
(21) Anmeldenummer: 06005208.1
(22) Anmeldetag: 14.03.2006
(51) Int. Cl.: B60H 1/22

(54) **Verfahren zum Betreiben eines Fahrzeugheizsystems**
Method for controlling a vehicle heating system
Méthode de contrôle d'un système de chauffage de véhicule

(30) Priorität: 07.04.2005 DE 102005016058
(43) Veröffentlichungstag der Anmeldung: 11.10.2006
(73) Patentinhaber: J. Eberspächer GmbH & Co. KG, 73730 Esslingen (DE)
(72) Erfinder: Schlecht, Patric, 73760 Ostfildern (DE); Collmer, Andreas, 73773 Aichwald (DE); Haefner, Michael, 70469 Stuttgart (DE)
(74) Vertreter: Ruttensperger, Bernhard

(56) Entgegenhaltungen:
- EP-A- 1 375 214
- EP-A- 1 475 260
- US-A1- 2004 065 745

## Beschreibung

Die vorliegende Erfindung betrifft ein Verfahren zum Betreiben eines Fahrzeugheizsystems, welches Fahrzeugheizsystem ein Fahrzeugheizgerät mit einem Brennerbereich und einem Wärmetauscherbereich sowie einem Heizluftfördergebläse zum Fördern von zu erwärmender Luft über den Wärmetauscherbereich hinweg in einen Fahrzeuginnenraum umfasst sowie in Luftströmungsrichtung stromaufwärts des Luftfördergebläses eine Frischluft/Umluft-Einstellvorrichtung, wobei der Brennerbereich, das Luftfördergebläse und die Frischluft/Umluft-Einstellvorrichtung unter der Ansteuerung einer Ansteuervorrichtung stehen.

Derartige Fahrzeugheizsysteme werden im Allgemeinen so betrieben, dass ein Sollwert für die Temperatur in einem Fahrzeuginnenraum vorgegeben wird. Die Temperatur im Fahrzeuginnenraum wird durch einen Temperatursensor erfasst und mit dem Sollwert verglichen. Liegt die Temperatur im Fahrzeuginnenraum unter dem Sollwert, so wird der Brennerbereich derart angesteuert bzw. mit derartiger Heizleistung betrieben, dass die Temperatur erhöht wird, also die durch das Luftfördergebläse geförderte Heizluft im Wärmetauscherbereich derart viel Wärme aufnehmen kann, dass nach Einleiten derselben in den Fahrzeuginnenraum sich möglichst schnell die gewünschte Solltemperatur einstellt. Liegt die Temperatur im Fahrzeuginnenraum über dem Sollwert, so wird im Allgemeinen der Verbrennungsbetrieb des Brennerbereichs des Fahrzeugheizgeräts geändert, so dass die in den Fahrzeuginnenraum eingeleitete bzw. vom Luftfördergebläse geförderte Luft nicht zusätzlich erwärmt wird und somit die Temperatur im Fahrzeuginnenraum absinken kann. Eine aus dieser Betriebsart resultierende Problematik ist, dass vergleichsweise starke Temperaturschwankungen auftreten und die Temperaturregelung relativ träge ist, da auch nach dem Einstellen des Verbrennungsbetriebs im Wärmetauscherbereich noch ausreichend Restwärme vorhanden ist, um die weiterhin geförderte Heizluft zu erwärmen. Weiterhin besteht das Problem, dass auf Grund dieser Art der Regelung ein ständiger Wechsel des Brennerbereichs zwischen einem Verbrennungsbetrieb und einem Betrieb ohne Verbrennung stattfindet, was eine vergleichsweise große Belastung verschiedener Systembereiche mit sich bringt und auf Grund der häufigen erforderlichen Startvorgänge zu einem sehr hohen Stromverbrauch im Bereich des zum Zünden zu erregenden Zündelements führt.

Die EP 1 475 260 A1 offenbart ein Heizsystem für ein Fahrzeug, bei dem die erwärmt in einen Fahrzeuginnenraum einzuleitende Heizluft über einen Mischer strömt, welcher aus dem Fahrzeuginnenraum abgezogene Umluft und von außen zugeführte Frischluft in einem auswählbaren Verhältnis mischt. Ein Luftfördergebläse fördert diese Heizluft durch einen Wärmetauscher eines brennstoffbetriebenen Heizgeräts. Die Temperatur des den Wärmetauscher verlassenden, erwärmten Heizluftstroms wird erfasst und in einem Steuergerät für das Heizgerät mit einem fest vorgegebenen Sollwert für diesen Heizluftstrom verglichen. Bei Abweichungen zwischen Istwert und Sollwert wird die Heizleistung des Heizgeräts angepasst, um dafür zu sorgen, dass im Wesentlichen unabhängig vom äußeren Einflüssen der Heizluftstrom mit konstanter Temperatur in den Fahrzeuginnenraum eingeleitet werden kann. Die Anpassung der Wärmemenge erfolgt durch die Ansteuerung des Heizluftgebläses, so dass bei größerem Wärmebedarf eine größere Heizluftmenge in den Fahrzeuginnenraum geleitet wird, als bei geringerem Wärmebedarf.

Die DE 44 47 285 A1 offenbart ein brennstoffbetriebenes Heizgerät, bei dem unter Berücksichtigung der im Fahrzeuginnenraum erfassten Temperatur die Leistungsstufen des Heizgeräts umschaltbar sind, um dafür zu sorgen, dass diese Temperatur in einem vorgegebenen Bereich liegt bzw. bleibt. Ferner wird unter Berücksichtigung der Fahrzeuginnentemperatur eine Umschaltung zwischen einem Umluftbetrieb und einem Frischluftbetrieb vorgenommen, wobei der Umluftbetrieb gewählt wird, wenn eine rasche Erwärmung erforderlich ist, während dann, wenn eine bestimmte Fahrzeuginnenraumtemperatur erreicht ist, der Frischluftbetrieb gewählt wird, um eine bessere Luftqualität zu erreichen.

Es ist das Ziel der vorliegenden Erfindung, ein Verfahren zum Betreiben eines Fahrzeugheizsystems vorzusehen, mit welchem eine weniger träge und verschiedene Systembereiche geringer belastende Einregelung der Temperatur in einem Fahrzeuginnenraum auf einen Sollwert möglich ist.

Erfindungsgemäß wird diese Aufgabe gelöst durch ein Verfahren zum Betreiben eines Fahrzeugheizsystems, welches Fahrzeugheizsystem ein Fahrzeugheizgerät mit einem Brennerbereich und einem Wärmetauscherbereich sowie einem Heizluftfördergebläse zum Fördern von zu erwärmender Luft über den Wärmetauscherbereich hinweg in einen Fahrzeuginnenraum umfasst sowie in Luftströmungsrichtung stromaufwärts des Luftfördergebläses eine Frischluft/Umluft-Einstellvorrichtung, wobei der Brennerbereich, das Luftfördergebläse und die Frischluft/Umluft-Einstellvorrichtung unter der Ansteuerung einer Ansteuervorrichtung stehen, wobei das Verfahren die folgenden Maßnahmen umfasst:
A) Vorgeben eines Sollwertes für die Temperatur eines Fahrzeuginnenraums,
B) dann, wenn die Temperatur des Fahrzeuginnenraums über dem Sollwert liegt,
   a) Ansteuern des Brennerbereichs zum Fortsetzen des Verbrennungsbetriebs mit reduzierter Heizleistung und
   b) Ansteuern der Frischluft/Umluft-Einstellvorrichtung zum Erhöhen des Frischluftanteils der durch das Luftfördergebläse geförderten Heizluft.

Wesentlich ist bei der erfindungsgemäßen Vorgehensweise, dass dann, wenn die Temperatur des Fahrzeuginnenraums an sich zu hoch ist, also über dem Sollwert liegt, nicht der Betrieb des Brennerbereichs eingestellt wird, sondern dieser weiterhin betrieben wird, eine Temperaturabsenkung aber dadurch erreicht wird, dass der Anteil an beizumengender Frischluft erhöht wird. Da in dieser Phase das Fahrzeugheizgerät weiter betrieben wird, entfällt die Notwendigkeit, dieses zu einem nachfolgenden Erwärmungsbetrieb wieder in Betrieb zu setzen. Daher mindert die erfindungsgemäße Vorgehensweise die Belastung der in der Startphase beaufschlagten bzw. wirksamen Systembereiche, wie zum Beispiel des Zündorgans oder einer elektrisch erregbaren Heizeinrichtung. Weiter ist von Vorteil, dass die Beimengung eines erhöhten Frischluftantells, der vor allem dann, wenn ein derartiges System bei vergleichsweise niedrigen Außentemperaturen betrieben wird, eine deutlich unter der Sollwerttemperatur liegende Temperatur aufweist, sich sofort spürbar macht, während ein Abschalten des Heizgeräts bzw. des Brennerbereichs desselben nur mit einer deutlich spürbaren Verzögerung auch zu einer Abnahme der Temperatur der weiterhin im Wärmetauscherbereich erwärmten Luft führen würde. Damit einhergehend wird auch die Qualität der Luft im Fahrzeuginnenraum verbessert und die Gefahr der Kondensatbildung vermindert.

Um die Zeitdauer, mit welcher die erfindungsgemäßen Maßnahmen im Fahrzeuginnenraum spürbar werden, weiter zu mindern und auch den Brennstoffverbrauch so gering als möglich zu halten, wird vorgeschlagen, dass bei Durchführung der Maßnahme B) der Brennerbereich zur Erzeugung der minimalen Heizleistung angesteuert wird. Grundsätzlich kann vorgesehen sein, dass die Maßnahme b) nur dann durchgeführt wird, wenn der Brennerbereich mit minimaler Heizleistung betrieben wird.

Wird bei der erfindungsgemäßen Vorgehensweise festgestellt, dass die Maßnahme B) nicht zu dem gewünschten Erfolg führt, so wird vorgeschlagen, dass dann, wenn nach Einleitung der Maßnahme B) die Temperatur des Fahrzeuginnenraums innerhalb einer vorbestimmten Zeit nicht unter den Sollwert fällt, der Brennerbereich zum Einstellen des Verbrennungsbetriebs angesteuert wird oder/und die Frischluft/Umluft-Einstellvorrichtung derart angesteuert wird, dass der durch das Luftfördergebläse geförderten Heizluft im Wesentlichen keine Umluft beigemengt wird.

Weiter kann bei dem erfindungsgemäßen Verfahren vorgesehen sein, dass dann, wenn nach Einleiten der Maßnahme B) die Temperatur des Fahrzeuginnenraums unter den Sollwert fällt, die Frischluft/Umluft-Einstellvorrichtung zum Verringern des Frischluftanteils angesteuert wird oder/und der Brennerbereich zum Erhöhen der Heizleistung angesteuert wird.

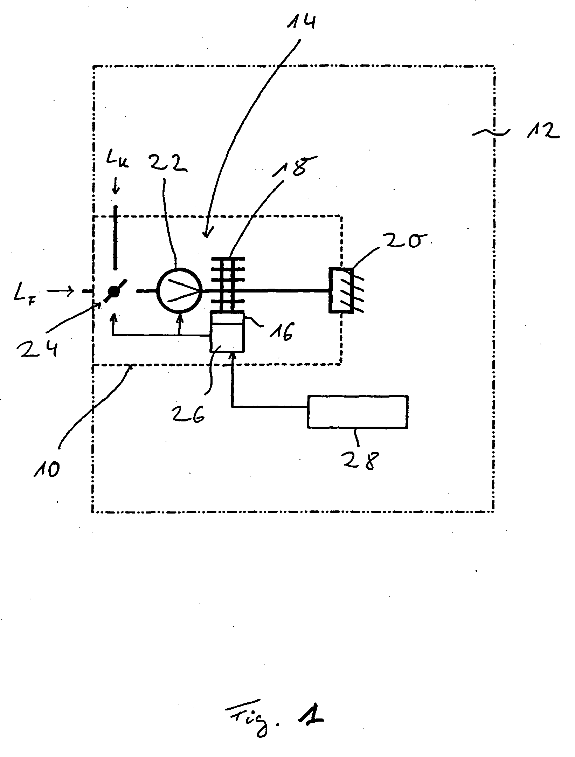

Die vorliegende Erfindung wird nachfolgend mit Bezug auf die beiliegende Figur 1 erläutert, welche in prinzipartiger Darstellung ein Fahrzeugheizsystem zur Erwärmung eines Fahrzeuginnenraums zeigt.

In der Figur 1 ist ein erfindungsgemäß zu betreibendes Fahrzeugheizsystem 10, das zur Erwärmung eines Fahrzeuginnenraums 12 dient, in schematischer Art und Weise dargestellt. Das Fahrzeugheizsystem 10 umfasst ein Heizgerät 14 mit einem Brennerbereich 16, in welchem flüssiger Brennstoff verbrannt wird, und einem Wärmetauscherbereich 18, welcher von den Verbrennungsabgasen des Brennerbereichs 16 durchströmt wird und dadurch Wärme aufnimmt. Der Wärmetauscherbereich 18 wird von zu erwärmender und über eine Einlassdüsenanordnung 20 in den Fahrzeuginnenraum 12 einzuspeisender Heizluft umströmt, welche durch ein stromaufwärts des Wärmetauscherbereichs 18 liegendes Luftfördergebläse 22 vorangeführt wird. Weiter stromaufwärts des Luftfördergebläses 22 ist eine Frischluft/Umluft-Einstellvorrichtung 24 in Form einer Frischluft/Umluft-Klappe angeordnet. Der Brennerbereich 16, das Luftfördergebläse 22 und die Vorrichtung 24 stehen unter der Ansteuerung eines Steuergeräts 26, das gemäß dem erforderlichen Betrieb Ansteuerbefehle für diese Systembereiche erzeugt. Das Steuergerät 26 empfängt von einem Temperatursensor 28 ein Signal, das die Temperatur im Fahrzeuginnenraum 12 repräsentiert. Ferner ist selbstverständlich eine nicht dargestellte Bedieneinheit vorgesehen, über welche von einer Bedienperson Vorgaben eingegeben werden können, beispielsweise ein Sollwert für die Temperatur im Fahrzeuginnenraum 12.

Liegt die Temperatur im Fahrzeuginnenraum 12 unter einem Temperatursollwert, so wird der Brennerbereich 16 derart betrieben, dass er durch den dort ablaufenden Verbrennungsbetrieb ausreichend Wärme bereitstellt, die im Wärmetauscherbereich 18 dann auf die von dem Luftfördergebläse 22 geförderte Luft übertragen wird. Da im Allgemeinen ein derartiger Heizbetrieb bei zu niedriger Temperatur im Fahrzeuginnenraum 12 erforderlich ist, wenn die Umgebungstemperatur vergleichsweise niedrig ist, kann in einer derartigen Heizbetriebsphase vorgesehen sein, dass die Vorrichtung 24 so angesteuert wird, dass sie primär Umluft L_{U} in Richtung zum Luftfördergebläse 22 leitet, während der Anteil der beizumengenden Frischluft L_{F} sehr gering gehalten ist bzw. überhaupt keine Frischluft beigemengt wird. Auf diese Art und Weise kann eine schnellstmögliche Erwärmung des Fahrzeuginnenraums 12 erreicht werden.

Wird durch den Temperatursensor 28 ein Signal generiert, das darauf hindeutet, dass die Temperatur im Fahrzeuginnenraum 12 über dem Sollwert liegt, so werden durch das Steuergerät 26 Ansteuermaßnahmen ergriffen, die dazu führen, dass keine weitere Erwärmung des Fahrzeuginnenraums 12 eintritt bzw. dessen Temperatur sich dem Sollwert von oben annähert. Hierzu kann erfindungsgemäß zunächst vorgesehen sein, dass der Heizbereich 16 derart angesteuert wird, dass er weiterhin betrieben wird, jedoch mit reduzierter, beispielsweise minimaler Heizleistung. Gleichzeitig wird das Luftfördergebläse 22 weiter betrieben, um Luft über den Wärmetauscherbereich 18 hinweg in Richtung zum Fahrzeuginnenraum 12 zu speisen. In dieser Phase wird jedoch nicht oder nicht primär Umluft L_{U} umgewälzt, sondern es wird durch eine entsprechende Ansteuerung der Vorrichtung 24 der Anteil an Frischluft L_{F} erhöht. Beispielsweise kann vorgesehen sein, dass der Anteil der beizumengenden Umluft L_{U} auf einen Wert Null oder nahe bei Null gesenkt wird, so dass im Wesentlichen nur Frischluft L_{F} zugeführt wird. Da, wie bereits erwähnt, das Betreiben eines derartigen Heizgeräts 14 im Allgemeinen nur erforderlich ist, wenn vergleichsweise niedrige Außentemperaturen vorherrschen, wird also diese Frischluft L_{F} eine Temperatur aufweisen, die deutlich unter der Temperatur des Fahrzeuginnenraums 12 liegt. Dies wird auch dann noch der Fall sein, wenn diese Frischluft L_{F} den Wärmetauscherbereich 18 umströmt hat und darin einen gewissen Wärmeanteil aufgenommen hat.

Durch das verstärkte bzw. alleinige Einleiten von Frischluft L_{F} bei gesenkter bzw. minimaler Heizleistung wird vergleichsweise schnell die Temperatur im Fahrzeuginnenraum 12 abnehmen und den Sollwert erreichen. Liegt die Temperatur des Fahrzeuginnenraums 12 dann wieder beim Sollwert bzw. wird der Sollwert unterschritten, so kann der Anteil an beizumengender Umluft L_{U} wieder erhöht werden und dementsprechend der Anteil an beizumengender Frischluft L_{F} gesenkt werden. Gleichzeitig kann die Heizleistung des Brennerbereichs 16 wieder erhöht werden, um eine größere Wärmemenge bereitzustellen, die dann auf die bereits mit höherer Temperatur durch das Luftfördergebläse 22 zum Wärmetauscherbereich 18 geleitete Heizluft übertragen werden kann.

Führt das Erhöhen des Frischluftanteils L_{F} und das Verringern der Heizleistung des Brennerbereichs 16 nicht zu der gewünschten Abnahme der Temperatur im Fahrzeuginnenraum 12, beispielsweise weil momentan eine vergleichsweise starke Sonneneinstrahlung vorherrscht, so kann in einer weitergehenden Maßnahme vorgesehen sein, dass der Verbrennungsbetrieb des Brennerbereichs 16 eingestellt wird, gleichwohl jedoch weiterhin das Luftfördergebläse 22 betrieben wird, um Heizluft, die im Wesentlichen nur Frischluft L_{F} umfasst, in Richtung Fahrzeuginnenraum 12 zu leiten. Da im Brennerbereich 16 dann keine Wärmeenergie mehr bereitgestellt wird, wird sich der Wärmetauscherbereich 18 auf Grund der weiter anhaltenden Umströmung mit vergleichsweise kalter Frischluft L_{F} relativ schnell abkühlen, mit der Folge, dass dann auch die Temperatur im Fahrzeuginnenraum 12 abfallen wird. Wird dann erkannt, dass die Temperatur im Fahrzeuginnenraum 12 den Sollwert erreicht bzw. unterschritten hat, wird der Brennerbereich 16 wieder in Betrieb gesetzt, und es kann der Umluftanteil wieder erhöht werden, um ein weiteres Abfallen der Temperatur im Fahrzeuginnenraum 12 zu verhindern.

Die erfindungsgemäße Vorgehensweise hat den wesentlichen Vorteil, dass bei Durchführung einer Temperaturregelung nicht ein permanentes Ausschalten und Anschalten des Brennerbereichs 16 erforderlich ist. Dies mindert die Belastung der vor allem zum Starten wirksamen Systembereiche im Brennerbereich 16, insbesondere eines Zündorgans, wie zum Beispiel Glühstift. Weiterhin hat das Beimengen eines erhöhten Frischluftanteils eine vergleichsweise spontane Änderung der Temperatur der eingeleiteten Luft zur Folge, so dass eine deutlich schnellere Temperaturregelung möglich wird.

Es ist selbstverständlich, dass die vorangehend beschriebenen Maßnahmen, insbesondere die Einstellung des Verhältnisses von Frischluft L_{F} zu Umluft L_{U}, in bestimmten Bereichen variiert werden können. So kann beispielsweise der Anteil der beizumengenden Frischluft in Abhängigkeit von der Temperatur dieser Frischluft, also der Umgebungstemperatur, variiert werden. Je niedriger die Umgebungstemperatur ist, desto geringer kann in einer Phase, in welcher die Temperatur im Fahrzeuginnenraum 12 gesenkt werden soll, der Anteil an beizumengender Frischluft L_{F} sein, um für in dem Fahrzeuginnenraum 12 sich befindende Personen zu starke Temperaturschwankungen der eingeleiteten Luft nicht spürbar zu machen. Auch kann vorgesehen sein, dass das Erhöhen des Frischluftanteils nur dann vorgenommen wird, wenn der Brennerbereich 16 bei minimaler Heizleistung betrieben wird. Befindet sich dieser zunächst noch in einem Betrieb mit vergleichsweise hoher Heizleistung, so kann zunächst versucht werden, die Temperatur im Fahrzeuginnenraum 16 nur dadurch zu senken, dass die Heizleistung verringert wird. Führt dies nicht zu dem gewünschten Erfolg, so kann bei dann bereits minimaler Heizleistung der Anteil der einzuspeisenden Frischluft L_{F} erhöht werden. Selbstverständlich ist es auch möglich, in den verschiedenen Betriebszuständen durch entsprechende Ansteuerung der Vorrichtung 24 den Umluftstrom vollständig abzuschließen, so dass nur Frischluft eingespeist wird, bzw. dann, wenn die Temperatur ausreichend gefallen ist, den Frischluftstrom vollständig abzuschließen, so dass zunächst wiederum nur Umluft umgewälzt wird.

## Patentansprüche

1. Verfahren zum Betreiben eines Fahrzeugheizsystems, welches Fahrzeugheizsystem ein Fahrzeugheizgerät mit einem Brennerbereich (16) und einem Wärmetauscherbereich (18) sowie einem Heizluftfördergebläse (22) zum Fördern von zu erwärmender Luft über den Wärmetauscherbereich (18) hinweg in einen Fahrzeuginnenraum(12) umfasst sowie in Luftströmungsrichtung stromaufwärts des Luftfördergebläses (22) eine Frischluft/Umluft-Einstellvorrichtung (24), wobei der Brennerbereich (16), das Luftfördergebläse (22) und die Frischluft/Umluft-Einstellvorrichtung (24) unter der Ansteuerung einer Ansteuervorrichtung (26) stehen, wobei das Verfahren die folgenden Maßnahmen umfasst:
A) Vorgeben eines Sollwertes für die Temperatur eines Fahrzeuginnenraums (12),
B) dann, wenn die Temperatur des Fahrzeuginnenraums (12) über dem Sollwert liegt,
a) Ansteuern des Brennerbereichs (16) zum Fortsetzen des Verbrennungsbetriebs mit reduzierter Heizleistung und
b) Ansteuern der Frischluft/Umluft-Einstellvorrichtung (24) zum Erhöhen des Frischluftanteils (L_{F}) der durch das Luftfördergebläse (22) geförderten Heizluft.

2. Verfahren nach Anspruch 1, **dadurch gekennzeichnet, dass** bei Durchführung der Maßnahme B) der Brennerbereich (16) zur Erzeugung der minimalen Heizleistung angesteuert wird.

3. Verfahren nach Anspruch 1, **dadurch gekennzeichnet, dass** die Maßnahme b) nur dann durchgeführt wird, wenn der Brennerbereich (16) mit minimaler Heizleistung betrieben wird.

4. Verfahren nach einem der Ansprüche 1 bis 3, **dadurch gekennzeichnet, dass** dann, wenn nach Einleitung der Maßnahme B) die Temperatur des Fahrzeuginnenraums (12) innerhalb einer vorbestimmten Zeit nicht unter den Sollwert fällt, der Brennerbereich (16) zum Einstellen des Verbrennungsbetriebs angesteuert wird oder/und die Frischluft/Umluft-Einstellvorrichtung (24) derart angesteuert wird, dass der durch das Luftfördergebläse (22) geförderten Heizluft im Wesentlichen keine Umluft (Lᵤ) beigemengt wird.

5. Verfahren nach einem der Ansprüche 1 bis 4, **dadurch gekennzeichnet, dass** dann, wenn nach Einleiten der Maßnahme B) die Temperatur des Fahrzeuginnenraums (12) unter den Sollwert fällt, die Frischluft/Umluft-Einstellvorrichtung (24) zum Verringern des Frischluftanteils (L_{F}) angesteuert wird oder/und der Brennerbereich (16) zum Erhöhen der Heizleistung angesteuert wird.

## Claims

1. A method of operating a vehicle heating system, which vehicle heating system comprises a vehicle heating appliance with a burner zone (16) and a heat-exchanger zone (18), and also with a heating air blower (22) for conveying air to be heated away via the heat-exchanger zone (18) into a vehicle interior (12), and also a fresh air/recirculated air adjusting device (24) upstream of the air blower (22) in the air flow direction, wherein the burner zone (16), the air blower (22) and the fresh air/recirculated air adjusting device (24) are under the control of an activating device (26), wherein the method comprises the following measures:
A) predetermining a desired value for the temperature of a vehicle interior (12),
B) then, if the temperature of the vehicle interior (12) is below the desired value,
a) activating the burner zone (16) so as to continue burner operation at reduced heating output and
b) activating the fresh air/recirculated air adjusting device (24) so as to increase the fresh air component (L_{F}) of the heating air conveyed by the air blower (22).

2. A method according to Claim 1, **characterised in that** in carrying out measure B) the burner zone (16) is activated so as to generate the minimum heating output.

3. A method according to Claim 1, **characterised in that** the measure b) is only carried out when the burner zone (16) is operated with minimum heating output.

4. A method according to any one of Claims 1 to 3, **characterised in that** if, after initiating measure B) the temperature of the vehicle interior (12) does not fall below the desired value within a predetermined time, the burner zone (16) is activated so as to adjust the burner operation and/or the fresh air/recirculated air adjusting device (24) is activated so that substantially no recirculated air (L_{U}) is added to the heating air conveyed by the air blower (22).

5. A method according to any one of Claims 1 to 4, **characterised in that** if, after initiating measure B) the temperature of the vehicle interior (12) falls below the desired value, the fresh air/recirculated air adjusting device (24) is activated so as to decrease the fresh air component (L_{F}) and/or the burner zone (16) is activated so as to increase the heating output.

## Revendications

1. Procédé de fonctionnement d'un système de chauffage de véhicule, lequel système de chauffage de véhicule comporte un appareil de chauffage de véhicule doté d'une zone de brûleur (16) et d'une zone d'échangeur de chaleur (18) ainsi que d'une soufflante d'amenée d'air chaud (22) destinée à amener l'air à réchauffer par-dessus la zone d'échangeur de chaleur (18) dans un habitacle de véhicule (12) et, dans la direction d'écoulement d'air en amont de la soufflante d'amenée d'air (22), un dispositif de réglage d'air froid/d'air pulsé (24), la zone de brûleur (16), la soufflante d'amenée d'air (22) et le dispositif de réglage d'air froid/d'air pulsé (24) étant commandés par un dispositif de commande (26), le procédé comportant les mesures suivantes consistant à :
A) prédéfinir une valeur théorique pour la température d'un habitacle de véhicule (12),
B) puis, lorsque la température de l'habitacle de véhicule (12) dépasse la valeur théorique,
a) commander la zone de brûleur (16) pour poursuivre le mode combustion avec une puissance calorifique réduite et
b) commander le dispositif de réglage d'air froid/d'air pulsé (24) pour augmenter la proportion d'air froid (L_{F}) de l'air chaud amené à travers la soufflante d'amenée d'air (22).

2. Procédé selon la revendication 1, **caractérisé en ce que** lorsque la mesure B) est réalisée, la zone de brûleur (16) destinée à produire la puissance calorifique minimale est commandée.

3. Procédé selon la revendication 1, **caractérisé en ce que** la mesure B) n'est réalisée que lorsque la zone de brûleur (16) fonctionne avec une puissance calorifique minimale.

4. Procédé selon l'une quelconque des revendications 1 à 3, **caractérisé en ce que**, une fois la mesure B) déclenchée, lorsque la température de l'habitacle de véhicule (12) ne chute pas en un laps de temps prédéfini au-dessous de la valeur seuil, la zone de brûleur (16) destinée à régler le mode combustion est commandée et/ou le dispositif de réglage d'air froid/d'air pulsé (24) est commandé de telle sorte que sensiblement aucun air pulsé (Lᵤ) n'est ajouté à l'air chaud amené par la soufflante d'amenée d'air (22).

5. Procédé selon l'une quelconque des revendications 1 à 4, **caractérisé en ce que**, une fois la mesure B) déclenchée, lorsque la température de l'habitacle de véhicule (12) chute au-dessous de la valeur théorique, le dispositif de réglage d'air froid/d'air pulsé (24) destiné à réduire la proportion d'air froid (L_{F}) est commandé et/ou la zone de brûleur (16) destinée à commander la puissance calorifique est commandée.
